# EUROPEAN PATENT APPLICATION

(11) **EP 2 762 997 A2**
(43) Date of publication of application: **06.08.2014**
(21) Application number: 14150215.3
(22) Date of filing: 06.01.2014
(51) Int. Cl.: G06F 3/01

(54) **Eye tracking user interface**

(30) Priority: 07.01.2013 US 201313735898
(71) Applicant: Sony Corporation, Tokyo 108-0075 (JP)
(72) Inventor: Friedlander, Steven, San Diego, CA 92126 (US)
(74) Representative: McGowan, Cathrine

(57) **Abstract**

A method for providing a graphic interface is disclosed. The method includes the steps displaying a set of interface tiles on a display device, detecting a location of a user's gaze, identifying that a user is looking at one tile of the set of interface tiles for a set period of time, displaying a expansion tile along with the set of interface tiles, the expansion tile comprises additional content associated with an identified tile of the set of interface tiles that the user is looking at.

## Description

### BACKGROUND OF THE INVENTION

### 1. Field of the Invention

The present invention relates generally to a graphical user interface, and more specifically to providing eye tracking interaction with a graphical user interface.

### 2. Discussion of the Related Art

Graphical user interfaces are a type of user interface that allow users to interact with electronic devices using images. Most graphical user interfaces display various graphical representations of computer applications and controls that can be manipulated by a user. The design of user interface is an important component of many operating systems and computer applications, and can affect a user's overall experience with a device and/or application.

### SUMMARY OF THE INVENTION

Aspects and embodiments of the invention are defined in the appended claims.

Several embodiments of the invention advantageously address the needs above as well as other needs by providing an eye-tracking interaction with a user interface.

In one embodiment, the invention can be characterized as a method for providing a graphic interface. The method includes the steps of displaying a set of interface tiles on a display device, detecting a location of a user's gaze, identifying that a user is looking at one tile of the set of interface tiles for a set period of time, displaying a expansion tile along with the set of interface tiles, the expansion tile comprises additional content associated with the identified interface tile of the set of interface tiles that the user is looking at.

In another embodiment, the invention can be characterized as an apparatus for providing a graphic interface. The apparatus includes an eye-tracking device; a display device; and a processor based system. The processor based system is configured to cause the display device to display a set of interface tiles on the display device, detect a location of a user's gaze using signals from the eye tracking device, identify that a user is looking at one tile of the set of interface tiles for a set period of time, cause the display device to display a expansion tile along with the set of interface tiles, the expansion tile comprises additional content associated with the one tile of the set of interface tiles that the user is looking at.

In a further embodiment, the invention may be characterized as a computer software product including computer executable codes stored on a computer readable storage medium. The computer executable code is configured to cause a processor based system to perform the steps of displaying a set of interface tiles on a display device, detecting a location of a user's gaze, identifying that the user is looking at one interface tile of the set of interface tiles for a set period of time, displaying a expansion tile along with the set of interface tiles, the expansion tile comprises additional content associated with the identified interface tile of the set of interface tiles that the user is looking at.

### BRIEF DESCRIPTION OF THE DRAWINGS

The above and other aspects, features and advantages of several embodiments of the present invention will be more apparent from the following more particular description thereof, presented in conjunction with the following drawings.
FIG. 1 is a flow chart showing a method for providing eye tracking interaction with a user interface according some embodiments of the present invention.
FIGS. 2-4 are illustrations of user interfaces according some embodiments of the present invention.
FIG. 5 is a simplified block diagram of a system according to some embodiments of the present invention.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention.

### DETAILED DESCRIPTION

The following description is not to be taken in a limiting sense, but is made merely for the purpose of describing the general principles of exemplary embodiments. The scope of the invention should be determined with reference to the claims.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided, such as examples of programming, software modules, user selections, network transactions, hardware modules, hardware circuits, etc., to provide a thorough understanding of embodiments of the invention. One skilled in the relevant art will recognize, however, that the invention can be practiced without one or more of the specific details, or with other methods, components, materials, and so forth. In other instances, well-known structures, materials, or operations are not shown or described in detail to avoid obscuring aspects of the invention.

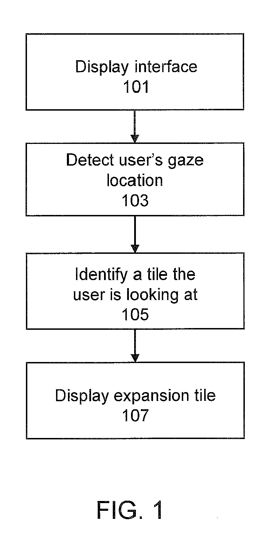

Referring first to FIG. 1, a method for providing eye tracking interaction with a user interface according some embodiments is shown. The method shown in FIG. 1 may be performed by a processor based system. In step 101, a user interface is shown. The user interface may be shown on a display device of an electronics device such as television, desktop computer, laptop computer, tablet computer, game console, mobile phone, smart phone, portable media player, set-top box, personal data assistant, and the like. The interface may be the user interface of an operating system or an application and/or be a plug-in to an operating system user interface. The interface may also be the user interface of a web-based and/or cloud-based remote application. In some embodiments, the eye tracking user interface is also configured to interacts with a user through means other than eye-tracking, such as through voice commands, touch screen inputs, pointer device inputs, keyboard inputs, motion sensor signals, remote control inputs etc. The user interface may be designed to account for the reduced precision of eye tracking techniques. For example, the interface icons or tiles may be designed to be sufficiently large in size to reduce identification errors.

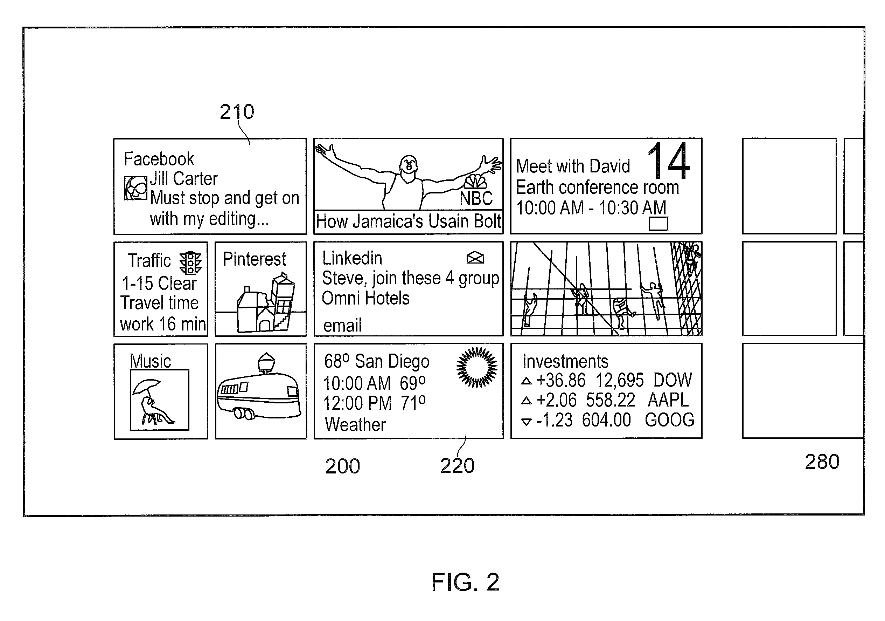

The user interface may include a number of interface tiles arranged in a grid. Some of the interface tiles may occupy two or more cells of the grid. Some of the interface tiles may be associated with a program or application and the selection of the tile may trigger the launch of that program or application. In some embodiments, the tiles may be one or more of text, graphics, photographs, videos. Some interface tiles may be on text on colored backgrounds that displays information associated with the program. In some embodiment, a graphic image associated with the program occupies the entire tile. In some embodiments, only a subset of all interface tiles are shown at one time, and the user can scroll to see the remaining tiles. While these icons are generally described as "tiles" in the present disclosure, it is understood that "tiles" is not limited to square or rectangular icons, instead, may be icons of any number of sizes and shapes arranged in a number of configurations. A more detailed discussion of the appearance of the user interface and the content of the tiles is provided hereinafter with references to FIGS. 2-4.

In step 103, a user's gaze location is detected. User's gaze location refers to a location that the user is looking at, which may correspond to a location on a display screen. The detecting of user's gaze location may be performed by an eye tracking device such as a camera, a light sensor, a motion sensor and the like. In some embodiments, the gaze is detected with an eye tracking eyewear. The detecting of a user's gaze may be based on tracking the location and/or motion of a user's eye, head and/or facial features. In some embodiments, video images captured by a camera may be analyzed to detect the location of a user's gaze. In some embodiments, a location or area corresponding to the detected location of the user's gaze is indicated on the display screen. For example, a corresponding on-screen location may be indicated by a cursor or by highlighting or otherwise emphasizing a tile located at the determined gaze location.

In step 105, an interface tile the user is looking at is identified. An interface tile may be identified based on the detected location of a user's gaze. For example, if the user's gaze is detected to be at location (x, y) of the display screen, the tile that occupies that area of the display is identified. The identification of the interface tile the user is looking at may be based on whether the user has performed a long gaze. That is, whether a user has looked at a tile for over a predefined period of time. In some embodiments, the predefined period of time is a user configurable variable. In some embodiments, a tile may be identified only if the user has been looking at approximately the same location for a second. The identification of the tile may account for minor movement of the user's gaze during that time period. In some embodiments, the expansion tile is shown only when the user has performed a long gaze on the tile and gave a voice command.

In step 107, an expansion tile is displayed. In some embodiments, an expansion tile is displayed when an interface tile on the grid is identified as a tile that user is looking at. In some embodiments, the expansion tile may be displayed adjacent to the associated interface tile. The displaying of the expansion tile may include rearranging some of the interface tiles on the interface tile grid. In some embodiments, the expansion tile does not obscure a user's view to any of the interface tiles displayed during step 101. In some embodiments, the rearrangement of the interface tiles may cause some of the tiles to be outside the frame of the display. In some embodiments, the expansion tile is inserted between the column of the identified interface tile and a column of interface tiles adjacent to the interface tile such interface tiles to one side of the expansion tiles rearranged away from the identified interface tile to make room for the display of the expansion tile.

In some embodiments, the expansion tile displays information or content associated with the identified interface tile. In some embodiments, the information or content displayed in the expansion tile may be one or more of news feeds, blog posts, website snapshot, weather information and forecasts, social media status updates, game score board, video clip, photographs, calendar, appointment schedule, map, audio playlist, and stock ticker. More detailed examples of expansion tiles configuration and contents are provided hereinafter with reference to FIGS. 2-4.

In some embodiments, the user can interact with the content of the expansion tile with one or more user input methods such as eye movement, gaze location, voice comment, touch input, pointer/cursor input, keyboard input and the like. The additional user input can cause the expansion tile to display additional content, display different type of content, display a control or options menu, or launch a program etc. For example, the user may scroll the content of the expansion tile with eye movement. In another example, voice commands may be made to trigger an action in the expansion tile and/or the main application. For example, while looking at the content of the expansion tile, the user may say "open" to run an associated program or application. In some embodiments, the action is based on a combination of the detected location of the user's gaze and one of the other inputs.

After step 107, in some embodiments, the system may detect that the user's gaze has moved away from area occupied by the expansion tile. When the user's gaze is no longer looking at the expansion tile and/or the previously identified interface tile, the expansion tile may cease to be displayed. For example, the user interface may return to the state prior to the expansion tile being display. The user may then look at another tile for a period of time and trigger the display of another expansion tile associated with that second interface tile. Alternatively, in some embodiments, the expansion tile is displayed even if user's gaze has left the expansion tile, and is removed only when the user has triggered the display for a second expansion tile.

Referring next to FIG. 2, an illustration of an eye tracking user interfaces according to some embodiments is shown. FIG. 2 may be an example of an interface displayed at step 101 of FIG. 1. The user interface shown in FIG. 2 includes tile grids 200 and 280. Tile grid 200 includes eleven interface tiles. The number of tiles shown in FIG. 2 is for illustration purposes only. The user interface may include any number of tiles arranged in any number of columns and rows. The user interface may also include icons in other configurations. The grid 200 shown in FIG. 2 includes, among others, a social media interface tile 210 and a weather interface tile 220. Each interface tile can include text and icons on colored backgrounds and/or pictures, animated images, video clips and the like. As shown in FIG. 2, the tiles on the tile grid 200 may not be all equal in size. Some tiles may occupy one cell on the grid 200 while others, such as interface tiles 210 and 220, occupies two cells. In some embodiments, a grid may include larger or smaller tiles, such as tiles that occupy half, three, or four cells etc.

In some embodiments, a user can interact with the tiles on the tile grid 280 by looking to the right of the screen to scroll the tile grid 280 into view. In some embodiments, looking to the left, top or bottom of the interface triggers other actions such as displaying an options menu, a start menu, a shortcuts menu, a virtual keyboard etc.

In some embodiments, at least some of the interface tiles are associated with a program or application. For example, the social media interface tile 210 may be associated with a social media application or a web-browser bookmark. The weather interface tile 220 may be associated with a weather information application or a web-site bookmark. In some embodiments, users can run the associated program or application by selecting an interface tile. For example, a user may use a voice command while looking at the tile to execute the associated program or application. In some embodiments, users can select a tile to run a program by using a touch screen input device, a pointer device, voice commands, a remote controller, a game controller, a keyboard, and the like. In some embodiments, at least some of the interface tiles are not associated with a program or application.

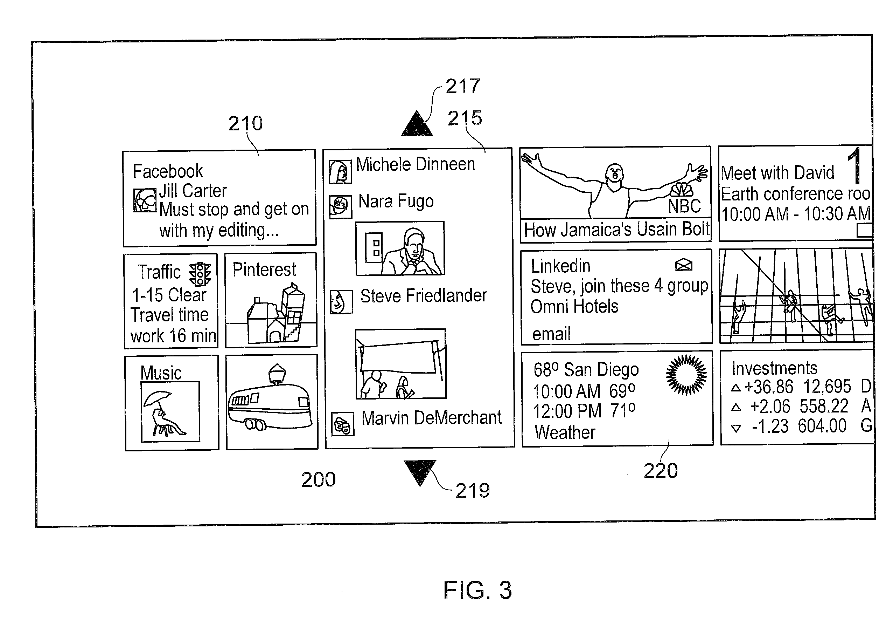

Referring next to FIG. 3, an illustration of an exemplary user interfaces with an expansion tile being displayed according to some embodiments is shown. In some embodiments, FIG. 3 shows an example of an interface displayed at step 107. For example, after a system tracks a user's gaze and detect that the user has been looking at social media interface tile 210 as shown in FIG. 2 for over a predetermined period of time, expansion tile 215 is displayed. As shown in FIG. 3, looking at social media interface tile 210 triggers the display of an expansion tile (215) with content showing social media update. In FIG. 3, the expansion tile 215 is inserted between the column of its associated interface tile 210 and another column of tiles. Interface tiles may be rearranged in a number of other ways when an expansion tile is displayed. For example, some or all of the interface tiles may be moved up, down, left, or right when an expansion tile is displayed. In some embodiments, the location of some of the interface tiles may also change with respect to one another. In some embodiments, the interface tiles are rearranged such that the expansion tile does not block the interface tiles on the grid 200 on screen.

In some embodiments, a user may look up or down to scroll the content of the expansion tile 215. The eye tracking may include tracking the movement and/or location of the user's gaze while the user is looking at the content of an expansion tile. The system can then scroll the content based on the tracked movement or location of the user's eyes. In some embodiments, scroll icons 217 and 219 are displayed along with the expansion tile 215. A user can look at scroll icon 219 to scroll the content of the social media updates feed in the expansion tile 215 downward to see more content. A user can also look at scroll icon 217 to scroll the content upwards.

In some embodiments, the user can further interact with the content of the expansion tile with other input devices. For example, touch screen inputs, pointer devices, microphone, keyboard, remote control, game controller and the like can be used to select an item in the expansion tile to perform an action. In the example of the social media feed shown in expansion tile 215, a user may select one of the updates using an input device to view the complete update in an associated social media application. In another example, a user may select one of the photo updates using an input device to enlarge the image for viewing without running the full social media application. The above example are given as illustrations only, content of a expansion tile can be interactive in a number of ways that may or may not involve executing the program or application associated with identified interface tile and the expansion tile.

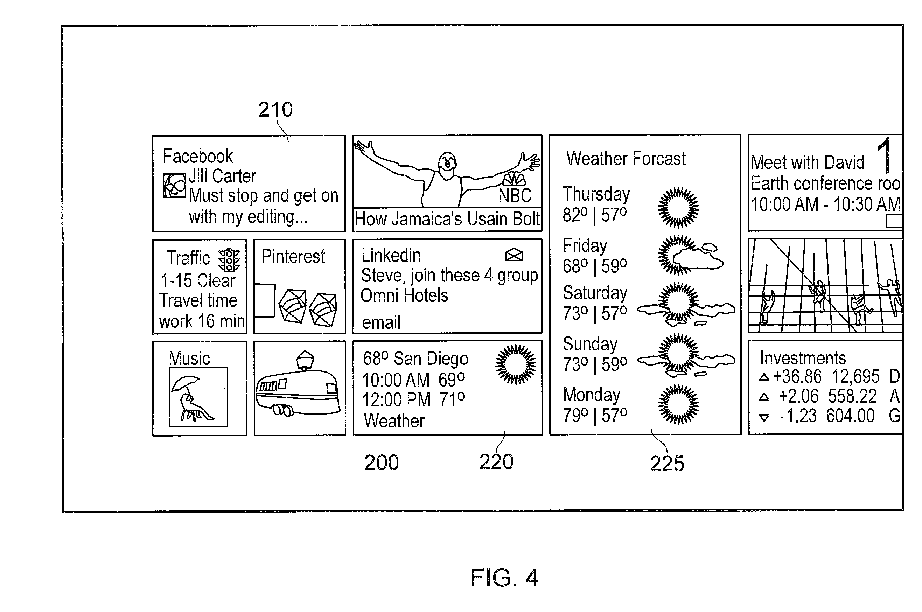

Referring next to FIG.4, an illustration of another exemplary user interfaces with an expansion tile being displayed according to some embodiments is shown. In some embodiments, FIG. 4 shows another example of an interface displayed at step 107. For example, after a system track the user's gaze and detect that the user has been looking at interface tile 220 as shown in FIG. 2 for over a predetermined period of time, expansion tile 225 may be displayed. In some embodiments, FIG. 4 is shown after a user looking at expansion tile 215 in FIG. 3 moves his gaze away from the expansion tile 215 and onto the interface tile 220.

As shown in FIG. 4, the weather information interface tile 220 may display the current weather condition and weather forecast for one day. Looking at weather interface tile 220 for a set period of time triggers the display of an expansion tile 225 showing weather forecast for multiple days. FIG. 4 also shows that of several interface cells are rearranged when expansion tile 225 is displayed. In some embodiment, a user may further interact with the content of the expansion tile 225. For example, a user can look up and down to see weather information for days before and after the days shown in the expansion tile. In some embodiments, the user may select, using an input device, one of the dates to display a more detailed forecast of the selected date. For example, the detailed information may include hour-by hour-forecast, precipitation rate, wind speed, humidity, dew point, pollen index etc.

The user interface, interface tiles, and expansion tiles shown in FIG. 2-4 are only examples of embodiments of the eye tracking user interface described wherein. Other configurations are possible without departing from the spirit of the present disclosure. Additional example of interface tile and expansion tiles are provided herein for illustration.

In some embodiments, an interface tile may be associated with a news program, such as a news channel or website. The interface tile may display a news image, a video clip, headlines, and/or a user selected news feed. The interface tile, when selected, may open an application for accessing a news channel or site. An expansion tile associated with the news interface tile may display a new video, a list of headlines, new summaries, full new articles, and the like.

In some embodiments, an interface tile may be associated with a calendar program. The interface tile may display the current date and one or more calendar entry. The calendar interface tile, when selected, may open the calendar for viewing and editing. An expansion tile associate to the calendar interface tile may display additional calendar entries and/or display a week view or month view of the calendar.

In some embodiments, an interface tile may be a traffic information tile. The interface tile may display an estimated travel time to a destination and/or an indicator of the current state of the traffic on a predefined route. The traffic information tile, when selected, may open a map for providing directions and setting destinations. An expansion tile associated with the traffic information tile may display a map of an area with traffic information overlay, a directions list, or may include a list of destinations.

In some embodiments, an interface tile may be a social photo sharing interface tile. The interface tile may display a photograph from a social photo sharing service. The social photo sharing tile, when selected, may open the photo sharing website or application. An expansion tile associated with the social photo sharing tile may display a feed of shared photos.

In some embodiments, an interface tile may be a music player tile. The music player tile may display an album cover of a song in the music library and/or of the song currently being played. The music player tile, when selected, may open a local or streaming music player application. An expansion tile associated with the music player tile may display a playlist and/or detailed information for the song currently playing, such as song name, artist name, lyrics, etc.

In some embodiments, one interface tile may be a photo album tile. The photo album tile may display one or more photos in the photo album. The photo album, when selected, may open a photo viewing application. An expansion tile associated with the photo album tile may show a slide show or thumb nails of the photos in the album.

In some embodiments, one interface tile may be a stock information tile. The stock information tile may display stock ticker for a selected set of stocks. The stock information tile, when selected, may open a stock tracking and/or trading program or website. An expansion tile associated with the stock information tile may display more stock tickers, graphics tracking tock prices, stock related news feed etc.

In some embodiments, one interface tile may be a sports score tile. The sports score tile may display game scores for a select set of games or teams. When selected, the sports score tile may open a sports reporting application or website. An expansion tile associated with the sports score tile may display additional game scores, game reports, game highlights, player stats, tournament brackets, upcoming game schedules etc.

Above descriptions are provided as examples only and are not meant to be limiting. In some embodiments, the content of the expansion tile may be determined by the associated program or application. In some embodiments, an operating system or a local program may generate the content of the expansion. For example, a local program may retrieve information from a web service associated with an application to generate the content of the expansion tile. In some embodiments, the content of the expansion tile can be customized with user configured settings.

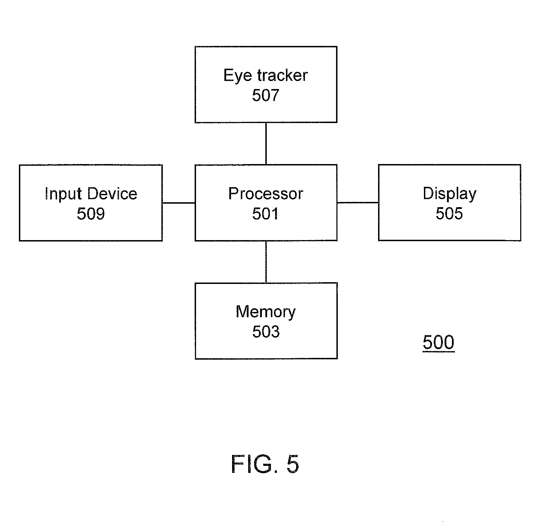

Referring next to FIG. 5, a simplified block diagram of a system according to some embodiments is shown. A system 500 for providing eye-tracking interface may include a processor 501, a memory 503, a display 505, an eye tracker device 507, and an input device 509.

The system 500 may be a television, desktop computer, laptop computer, tablet computer, game console, mobile phone, smart phone, portable media player, set-top box, personal data assistant, smart glasses and the like. The memory 503 may be RAM and/or hard drive memory on a device. The display 505 may be a display integrated with the system 500 or be a separate device. The eye tracker 507 may be a camera, a light sensor etc. that is capable of independently tracking the gaze of a user and/or provide a signal to the processor 501. The input device 509 may be one or more devices that allow user to interact with the system 500, such as a microphone, a keyboard, a mouse, a touch pad, a touch screen, a motion sensor, a remote control etc. In some embodiments, two or more of the processor 501, the memory 503, the display 505, the eye tracker device 507, and the other input device 509 may be integrated in one device.

In some embodiments, the eye tracking user interface is stored on memory 503. The processor 501 executes the codes stored on memory 503 to display a user interface on the display device 505. The processor 501 may use the signal received from the eye tracker device 507 to determine whether a user is looking at an interface tile in the user interface for a predetermined period of time. If so, the processor 501 causes the display device 505 to display an expansion tile associated with the identified interface tile. In some embodiments, if the processor 501 determines that the user is no longer looking at the expansion tile, the processor can remove the expansion tile from display. In some embodiments, a user may also interact with the user interface, the interface tiles, and the expansion tiles with one or more additional input device 509. In some embodiments, the processor 501 distinguishes the tracked eye gaze signal from the other input devices. For example, hovering of a pointer using a pointer device may be distinguished from a long eye gaze. In some embodiments the system 500 further includes an external connection such as internet connection, wi-fi connection, mobile network connection, wired network connection etc. for providing information to the interface tile, the expansion tile, application, program, and/or websites associated with an interface tile. In some embodiments, the eye-tracking user interface is the operating system of the system 500. In some embodiments, the eye-tracking user interface is the interface of a programs running on the system 500.

The above described methods and apparatus provides an efficient way for users to interact with an electronics device with eye gaze. The expansion tile can be utilized to quickly provide desired information to a user without requiring the device to run the full application. The user can also easily switch from one expansion tile to another without leaving the main interface. The expansion tiles also allows for the display of more information than can be accommodated in the original interface tile without permanently occupying extra space on the main interface. Furthermore, the user can interact with the user interface and obtain desired information with only eye movement, without the use of another input device such as touch screen, mouse, keyboard, remote control etc.

Many of the functional units described in this specification have been labeled as steps, in order to more particularly emphasize their implementation independence. For example, a step may be implemented as a hardware circuit comprising custom VLSI circuits or gate arrays, off-the-shelf semiconductors such as logic chips, transistors, or other discrete components. A step may also be implemented in programmable hardware devices such as field programmable gate arrays, programmable array logic, programmable logic devices or the like,

The steps may also be implemented in software for execution by various types of processors. An identified module of executable code may, for instance, comprise one or more physical or logical blocks of computer instructions that may, for instance, be organized as an object, procedure, or function. Nevertheless, the executables of an identified module need not be physically located together, but may comprise disparate instructions stored in different locations which, when joined logically together, comprise the step and achieve the stated purpose for the step.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

While the invention herein disclosed has been described by means of specific embodiments, examples and applications thereof, numerous modifications and variations could be made thereto by those skilled in the art without departing from the scope of the invention set forth in the claims.

Further particular and preferred aspects of the invention are set out in the following clauses. Features of the clauses may be combined with those of the independent and dependent claims and other clauses as appropriate and in combination other than those explicitly set out in the clauses and claims.
1. The method of Claim 1 or the apparatus of Claim 8 wherein the set of interface tiles comprise one or more interface tiles associated with one or more executable applications.
2. The method of Claim 1 or the apparatus of Claim 8 wherein the expansion tile is displayed adjacent to the identified interface tile.
3. The method of claim 1 wherein the additional content comprises at least one selected from a group consisting of: news feeds, blog posts, website snapshot, weather information and forecasts, social media status updates, game score board, video clip, photographs, calendar, appointment schedule, map, audio playlist, and stock ticker.

## Claims

1. A method for providing a graphic interface comprising:
displaying a set of interface tiles on a display device;
detecting a location of a user's gaze;
identifying a interface tile from the set of interface tiles that the user is looking at for a period of time;
displaying a expansion tile along with the set of interface tiles, the expansion tile comprising additional content associated with the identified interface tile of the set of interface tiles.

2. The method of claim 1, wherein displaying the expansion tile further comprises rearranging one or more tiles of the set of interface tiles.

3. The method of claim 1, further comprising:
receiving a voice command; and
executing a action based on a combination of detected location of user's gaze and the voice command.

4. The method of claim 1, further comprising:
scrolling the additional content in the expansion tile based on a movement of user's gaze.

5. The method of claim 1, wherein the set of interface tiles are arranged in a grid, and at least one of the set of interface tiles occupies two or more cells of the grid.

6. The method of claim 1, further comprising highlighting a tile from the set of interface tiles to indicate a detected location of user's gaze.

7. The method of claim 1, further comprising:
detecting that the user is not looking at the expansion tile; and
ending the displaying of the expansion tile.

8. An apparatus for providing a graphic interface comprising:
a eye-tracking device;
a display device; and
a processor based system, wherein the processor based system is configured to:
cause the display device to display a set of interface tiles on the display device;
detect a location of a user's gaze using signals from the eye-tracking device;
identify a interface tile from the set of interface tiles that the user is looking at for a period of time;
cause the display device to display a expansion tile along with the set of interface tiles, the expansion tile comprising additional content associated with the identified interface tile of the set of interface tiles.

9. The apparatus of claim 8, wherein displaying the expansion tile further comprises rearranging others of the set of interface tiles.

10. The apparatus of claim 8, further comprising:
receiving a voice command; and
executing a action based on a combination of detected location of user's gaze and the voice command.

11. The apparatus of claim 8, further comprising:
scrolling the additional content of the expansion tile based on a movement of user's eyes.

12. The apparatus of claim 8, wherein the set of interface tiles are arranged in a grid, and at least one tile of the set of interface tiles occupy two or more cells of the grid.

13. The apparatus of claim 8, further comprising highlighting a tile from the set of interface tiles to indicate a detected location of user's gaze.

14. The apparatus of claim 8, further comprising:
detecting that the user is not looking at the expansion tile;
ending the displaying of the expansion tile.

15. A computer software product comprising computer executable codes stored on a computer readable storage medium, wherein the computer executable code is configured to cause a processor based system to perform the steps of:
displaying a set of interface tiles on a display device;
detecting a location of a user's gaze;
identifying a interface tile from the set of interface tiles that the user is looking at for a period of time;
displaying a expansion tile along with the set of interface tiles, the expansion tile comprising additional content associated with the identified interface tile of the set of interface tiles.
